# EUROPEAN PATENT SPECIFICATION

(11) **EP 0 301 829 B1**
(45) Date of publication and mention of the grant of the patent: **09.03.1994**
(21) Application number: 88306920.5
(22) Date of filing: 27.07.1988
(51) Int. Cl.: G11B 7/24, G11B 7/26

(54) **Information recording discs**
Informationsaufzeichnungsplatten
Disque pour enregistrement d'information

(30) Priority: 27.07.1987 JP 114879/87 U
(43) Date of publication of application: 01.02.1989
(73) Proprietor: MITSUI PETROCHEMICAL INDUSTRIES, LTD., Tokyo 100 (JP)
(72) Inventor: Minoda, Takeshi, Ichihara-shi Chiba (JP); Todo, Akira, Ichihara-shi Chiba (JP); Kimura, Toshio, Ichihara-shi Chiba (JP); Kurisu, Masayoshi, Ichihara-shi Chiba (JP)
(74) Representative: Myerscough, Philip Boyd

(56) References cited:
- EP-A- 0 192 244

## Description

This invention relates to information recording discs which are useful for such purpose, for example, as optical discs.

Information recording discs made of plastics to perform storing and reading of information by converging rays of light such as laser beam and the like on recording medium containing layers have been widely known, in which disc substrates each having a recording medium containing layer are laminated directly or via spacers with adhesives or by means of ultrasonic welding technique so that said layers face to each other. In such information recording discs, however, the laminated disc substrates are liable to come away from each other by exposure to temperature and moisture cycle employed during long-term service of the discs, and especially those laminated with spacers tend to come away from each other, starting from the inner peripheral side thereof, to which driving force is applied.

With view of obviating such problems as mentioned above, there have been proposed information recording disc reinforced by forming layers of cured resin (adhesive) on the edge surfaces of center holes of the laminated disc substrates (Japanese Patent Laid-open Publn. No. 175046/1984), and information recording discs in which the peripheral portion of the center hole of the laminated disc substrates is provided with annularly perforated holes, cage-like connecting rods are inserted into the holes thus perforated, and metallic suction caps are fixed to both the upper and lower parts of the connecting rods thus inserted (Japanese Patent Laid-open Publn. No. 119747/1987).

In the information recording discs referred to above, however, there were involved such problems as will be mentioned below. That is, the former discs are weak in mechanical resistance to driving force from the inner peripheral portion, though are effective in resistance to the temperature and moisture cycle to which they are exposed, and the latter discs are much complicated in structure, require perforating operation and machine therefor when the laminated disc substrates are provided with the connecting rods, and involve difficulty in operation of inserting the connecting rods into the perforated disc substrates and fixing the metallic suction caps thereto.

EP-A-199136 discloses information recording discs in which the laminated disc substrates are joined through studs or spikes provided in outer and/or inner circumferential bands on at least one of the substrates.

EP-A-192244 discloses information recording discs in which disc substrates are connected by means of a hub constructed in two halves bonded at the centre of the disc substrates. In the illustrated embodiments each hub half is provided with an annular bonding recess for a bonding material in the end surface of an inner flange portion, and the hub halves are bonded by bonding material between their inner flange portions.

The present invention is intended to solve problems associated with such prior art as mentioned above, and the invention seeks to provide information recording discs which have the laminated portion of the inner peripheral portion of the disc substrate reinforced by virtue of employing a simple structure and, at the same time, in which the assembling operation is easy and high anchoring strength is obtained.

The present invention provides an information recording disc comprising a plurality of disc substrates, at least one of which comprises a recording medium containing layer, a hub in two pieces mounted on opposite sides of said disc, each hub piece having an insertion portion inserted into a center hole of said disc, said insertion portion having a flat end surface, and a flange portion covering a portion of a disc substrate in the vicinity of said center hole, and adhesive layers between a hub piece and a disc substrate and between the flat end surfaces of the insertion portions of the two hub pieces

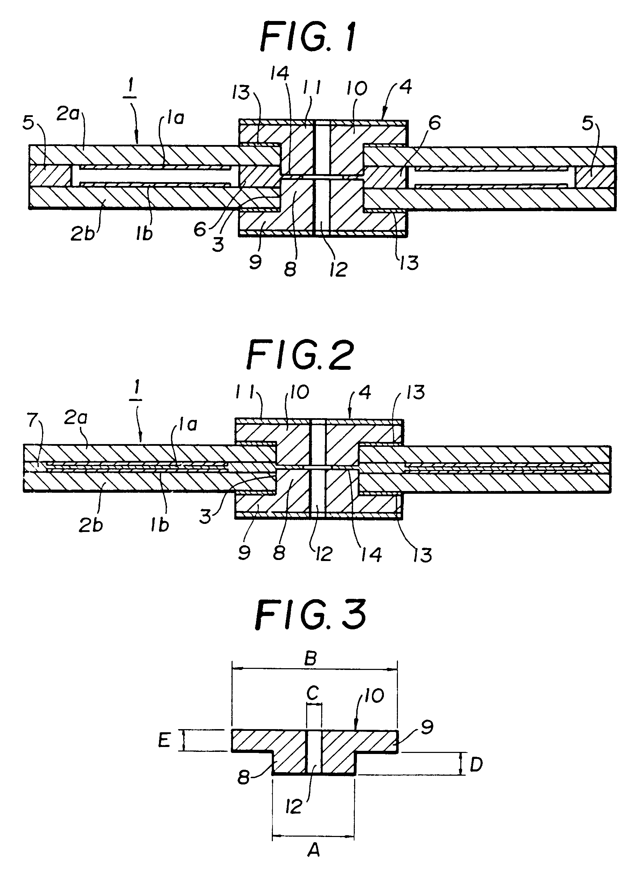

In the accompanying drawings, Figs. 1 and 2 are sectional views showing separate embodiments of the invention, respectively.

Fig. 3 is a sectional view showing a main body of hub.

Figs. 4 and 5 are sectional views showing comparative examples, respectively.

In the figures, the same signs represent the same or corresponding portions, where 1 is an information recording disc, 2a and 2b are disc substrates, 3 is a center hole, 4 is a hub, 5 is an outer peripheral spacer, 6 is an inner peripheral spacer, 7, 13 and 14 are adhesive layers, 8 is a portion of hub to be inserted into the center hole, 9 is a flange portion of hub, and 10 is a main body of hub.

In the information recording discs of the present invention, a plurality of disc substrates usually two disc substrates, at least one of which has a recording medium containing layer, are laminated so that the recording medium containing layers face to each other, and these disc substrates may be laminated directly (see Fig 2) or via spacers (see Fig. 1) with adhesives or by means of ultrasonic welding technique.

Materials used for forming the disc substrate, outer peripheral spacer and inner peripheral spacer are thermoplastic resins such as polycarbonates, polymethyl methacrylates and polyolefins. Preferred resins are copolymers of ethylene and cycloolefins represented by the following general formula [I] or [II]. Preferred copolymers are those which contain 40-85 mol%, preferably 50-80 mol% of ethylene. Particularly preferred resins for forming the disc substrate include, for example, cycloolefin type random copolymer compositions formed from components:
(A) a cycloolefin type random copolymer comprising an ethylene component and a cycloolefin component represented by the following general formula [I] or [II], said copolymer having an intrinsic viscosity [η] of 0.05-10 dl/g as measured in decalin at 135^{°}C and a softening temperature (TMA) of not less than 70°C, and
(B) a cycloolefin type random copolymer comprising an ethylene component and a cycloolefin component represented by the following general formula [I] or [II], said copolymer having an intrinsic viscosity [η] of 0.01-5 dl/g as measured in decalin at 135°C and a softening temperature (TMA) of less than 70°C, the weight ratio of said component (A)/component (B) being 100/0.1 to 100/10. Preferably, the component (A) contains 40-95 mol%, preferably 40-85 mol%, more preferably 50-75 mol% of ethylene, and the component (B) contains 60-98 mol%, preferably 60-95 mol% of ethylene, 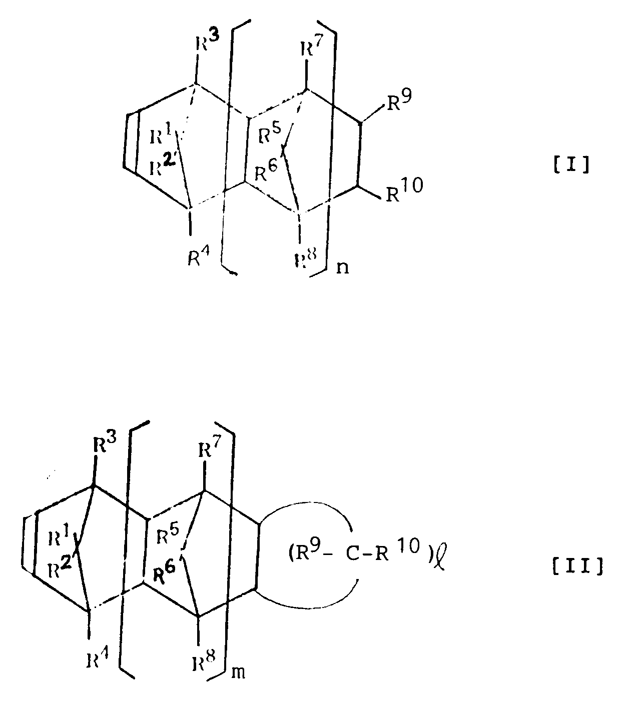 wherein n and m are each zero or a positive integer, ℓ is an integer of 3 or more, and R¹ to R¹⁰ each represent hydrogen atom, halogen atom or hydrocarbon group.

Useful hubs may be those made of metals, magnetic material-blended plastics, or metallic plate-attached plastics. From the standpoint of strength and mass-productivity, however, preferred are the metallic plate-attached plastics as mentioned above. The plastics used in the above-mentioned are desirably polycarbonates from the viewpoint fo strength and costs, though any resins such as thermosetting resins and the like may be used in addition to the above-illustrated thermoplastic resins. Adhesives used for bonding hubs to each other, and hubs to disc substrates are preferably those of epoxy type, particularly epoxy resins of ultraviolet-curing type, though any adhesives other than those mentioned above are also usable.

Information recording discs as referred to in the present invention are intended to include all discs which are capable of recording information on the recording medium containing layers thereof, such optical discs are flexible optical discs.

The information recording discs of the present invention may be assembled by laminating disc substrates directly or via an outer spacer and an inner spacer with adhesives or by means of ultrasonic welding technique so that recording medium containing layers of said disc substrates face to each other, inserting into a center hole of the laminated disc substrates hubs each having a portion to be inserted into said center hole from both sides of said laminated disc substrates to fit said hubs in the center hole, and charging adhesive layers into between the hubs and disc substrates and between the hubs to bond them to each other.

In the information recording discs of the present invention, since the hubs are in contact with the disc substrates by way of the portions of said hubs to be inserted into the center hole of the laminated disc substrates and flange portions of the hubs, said hubs are bonded to each other with an adhesive layer while the hubs and disc substrates are bonded to each other with adhesive layers, and the disc substrates are integrally assembled with the hubs, the inner peripheral portion of the information recording disc is reinforced and the laminated structural strength of said disc is increased.

### EFFECT OF THE INVENTION

In the present invention, since the hubs each having the portion thereof to be inserted into the center hole of the disc substrates to be laminated and the flange portion are fitted into said center hole from both sides thereof and the adhesive layers are formed between said hubs and said disc substrates and between said hubs themselves, the information recording discs obtained thereby are excellent in anchoring strength by virtue of the fact that the laminated inner peripheral portion of said information recording discs is reinforced by a simple assembling operation.

### EMBODIMENT OF THE INVENTION

The present invention is illustrated below with reference to embodiment as expressed in terms of figures shown in the accompanying drawings. Figs. 1 and 2 are sectional views showing separate embodiments of the information recording discs of the present invention, respectively, and Fig. 3 is a sectional view showing a main body of the hub.

In the figures, 1 is an information recording disc of a structure wherein the hubs 4 are fitted in a center hole of two disc substrates 2a and 2b being laminated so that recording medium containing layers 1a and 1b face to each other. In Fig. 1, the disc substrates 2a and 2b are superposed upon each other via an outer peripheral spacer 5 and an inner peripheral spacer 6 and laminated by the ultrasonic welding technique to an air sandwich structure, whereas in Fig. 2 said disc substrates 2a and 2b are directly laminated with an adhesive layer 7. The hubs 4 each comprise a main body 10 made of plastics and having a portion 8 to be inserted into the center hole 3 and a flange portion 9, a metallic plate 11 being fixed to the surface of the main body 10, and a hole 12 perforated at the center thereof. The metallic plate 11 is anchored to the hub main body 10 by means of cut and raised points of projections formed on said metalic plate 11 and so designed as to be driven by mechanical or magnetic force (detailed diagrammatic illustration in this respect is omitted). The portions 8 of the hubs 4 are so designed to be inserted into the center hole 3, and the flange portions 9 of the hubs 4 are so designed to cover the laminated disc substrates 2a and 2b in the vicinity of the center hole 3. Adhesive layers 13 are formed between the flange portions 9 of the hubs 4 and the laminated disc substrates 2a and 2b, and an adhesive layer 14 is formed between the portions 8 of the hubs 4, and thus all the constituents parts are integrally anchored to one another to a solid structure.

The information recording discs 1 comprising the continuent parts as shown in Figs. 1 and 2 are manufactured by laminating the disc substrates 2a and 2b directly with the adhesive layer 7 or by means of the ultrasonic welding technique via the outer peripheral spacer 5 and the inner peripheral spacer 6 so that the recording medium containing layers 1a and 1b face to each other, inserting the portions 8 of the hubs 4 into the center hole 3 from both sides thereof, charging the adhesive layers 13 between the flange portions 9 of the hubs 4 to anchor them to each other, and charging the adhesive layer 14 between the portions 8 of the hubs 4 to anchor them to each other.

In the information recording discs 1 thus manufactured, since the hubs 4 are in contact with the disc substrates 2a and 2b by way of the portions 8 and flange portions 9 of said hubs 4, and the hubs 4 themselves are bonded to each other by means of the adhesive layer 14 while the hubs 4 and the disc substrates 2a and 2b are bonded to each other by means of the adhesive layers 13, all the constituent parts are integrally formed to a solid structure, whereby the inner peripheral portion of the solid structure is reinforced to increase lamination strength thereof.

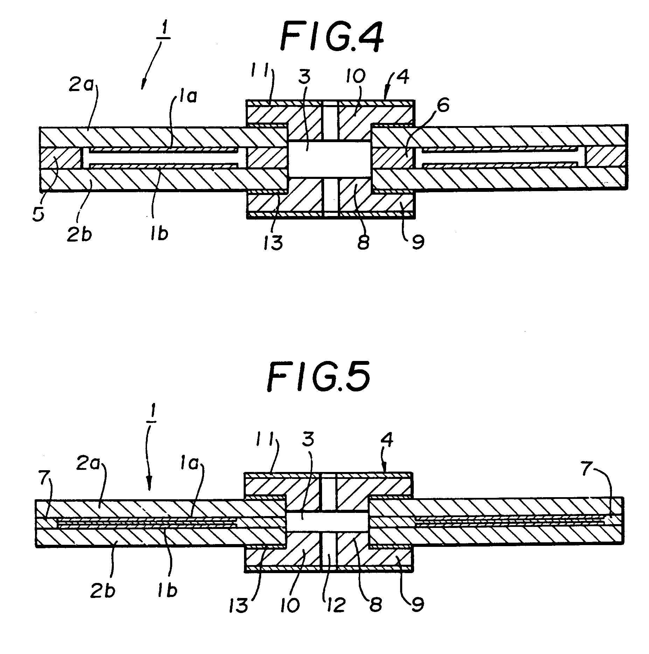

Figs. 4 and 5 are sectional views showing comparative examples of information recording discs, respectively. The information recording discs respectively represented by Figs. 4 and 5 are similar in structure to those shown in Figs. 1 and 2. In these information recording discs, however, the portions 8 of the hubs 4 to be inserted into the center hole 3 is short in length and no adhesive layer is formed between said portions 8 for the purpose of bonding them to each other. Accordingly, in the information recording discs as shown in Figs. 4 and 5, respectively, the inner peripheral portion thereof is low in strength.

Illustrated below are test examples of the information recording discs of the present invention and comparative examples.

In the information recording discs of Figs. 1, 2, 4 and 5, respectively, the aforementioned polyolefin resin was used for forming the disc substrates 2a and 2b, and the outer peripheral spacer 5 and inner peripheral spacer 6, polycarbonate was used for forming the main body 10 of the hubs 4, and an epoxy type resin was used for forming the adhesvie layers 7, 13 and 14, respectively. The disc substrates 2a and 2b both had an outside diameter of 130 mm, an inside diameter of 15 mm, and a thickness of about 1.2 mm. The main body 10 of the hubs 4 of Fig. 1 had A=15 mm, B=25 mm, C=4 mm, D=1.45 mm and E=2 mm in the main body 10 as shown in Fig. 3, while the value of D in the main body 10 of Figs. 2, 4 and 5, respectively, was varied. These information recording discs as illustrated above were subjected to drop test wherein they were allowed to drop from a height of 1 m.

As the result, debonding was partly observed in the outer peripheral space 5 of the disc of Fig. 1 when dropped 15 times, and the test was continued, whereupon no debonding of the hubs 4 and the inner peripheral spacer 6 was observed even when said disc was allowed to further drop 50 times. Furthermore, the disc shown in Fig. 1 had an adhesion strength of at least 10 kg/cm² between the hub and substrate, and also passed the delamination test continuously repeated at least 100,000 times. The disc of Fig. 2 was kept for 1000 hours in an oven at 70°C and 90% RH, and then subjected likewise to the test, whereupon no debonding of the hubs 4 occurred even when said disc was allowed to drop 50 times. In contrast thereto, debonding was partly observed in the inner peripheral spacer of the disc of Fig. 4 when said disc was allowed to drop 12 times. Furthermore, the disc shown in Fig. 4 had an adhesion strength of 5 kg/cm², and also failed to pass the delamination test continuously repeated less than 100,000 times. The disc of Fig. 5 was subjected to the same environmental test as in the case of the disc of Fig. 2, and then subjected to the drop test likewise, whereupon the hubs 4 were detached when said disc was allowed to drop 37 times.

In this connection, the adhesion strength was measured with an Intesco Universal Material Tester of 210 Model and a tensile instrument.

The drop test was conducted by dropping the disc placed in a cartridge from a height of 1.5 m onto a plastic tile of the floor, and the test was repeated continuously until the hub peels off from the substrate to record the number of times of the test repeated at which said hub peeled off finally.

The delamination test was conducted by repeating delamination of the disc using a driving device until the hub peels off from the substrate to check the number of times of the test repeated at which the hub peeled off finally.

From the results obtained above, it is understood that the information recording discs of the present invention are excellent in strength of the inner peripheral portion thereof and hard to subject to detachment, as compared with those of comparative examples.

## Claims

1. An information recording disc (1) comprising a plurality of disc substrates (2a, 2b), at least one of which comprises a recording medium containing layer (1a, 1b), a hub (4) in two pieces (10) mounted on opposite sides of said disc (1), each hub piece (10) having an insertion portion (8) inserted into a center hole (3) of said disc (1), said insertion portion (8) having a flat end surface, and a flange portion (9) covering a portion of a disc substrate (2a, 2b) in the vicinity of said center hole (3), and adhesive layers (13, 14) between a hub piece (10) and a disc substrate (2a, 2b) and between the flat end surfaces of the insertion portions (8) of the two hub pieces (10).

2. An information recording disc according to claim 1 wherein the disc substrates (2a, 2b) are laminated by means of annular spacers (5, 6) at or near the outer and inner edges of the disc substrates (2a, 2b).

3. An information recording disc according to claim 1 or 2 wherein the disc substrates (2a, 2b) are laminated with an adhesive layer or by ultrasonic welding.

4. An information recording disc according to claim 1 wherein the disc substrates (2a, 2b) are laminated directly with an adhesive layer (7 - Fig. 2).

## Patentansprüche

1. Informations-Aufzeichnungsplatte (1), umfassend eine Mehrzahl von Plattensubstraten (2a, 2b), von denen zumindest eine ein Aufzeichnungsmedium enthaltende Schicht (1a, 1b), ein Mittelteil (4) in zwei Stücken (10), die auf gegenüberliegenden Seiten der Platte (1) angeordnet sind, wobei jedes Mittelstück (10) einen Einsatzteil (8) aufweist, der in ein zentrales Loch (3) der Platte (1) eingesetzt ist, wobei der Einsatzteil (8) eine flache Endfläche und einen Flanschteil (9) aufweist, der einen Teil eines Plattensubstrats (2a, 2b) in der Nähe des zentralen Lochs (3) überdeckt, und Klebemittelschichten (13, 14) zwischen einem Mittelstück (10) und einem Plattensubstrat (2a, 2b) und zwischen den flachen Endflächen der Einsatzteils (8) und der beiden Mittelstücke (10) aufweist.

2. Informations-Aufzeichnungsplatte nach Anspruch 1, wobei die Plattensubstrate (2a, 2b) mit Hilfe von ringförmigen Abstandhaltern (5, 6) bei oder nahe den äußeren und inneren Rändern der Plattensubstrate (2a, 2b) laminiert sind.

3. Informations-Aufzeichnungsplatte nach Anspruch 1 oder 2, wobei die Plattensubstrate (2a, 2b) mit einer Klebemittelschicht oder durch Ultraschall-Verschweißen laminiert sind.

4. Informations-Aufzeichnungsplatte nach Anspruch 1, wobei die Plattensubstrate (2a, 2b) direkt mit einer Klebemittelschicht (7 - Fig.2) laminiert sind.

## Revendications

1. Disque pour enregistrement d'informations (1), comprenant une pluralité de supports (2a, 2b), dont l'un au moins comprend une couche (1a, 1b) contenant un milieu d'enregistrement, un moyeu (4) en deux parties (10) monté sur les côtés opposés dudit disque (1), chaque partie (10) du moyeu comportant une portion d'insertion (8) insérée dans un trou central (3) dudit disque (1), cette portion d'insertion (8) ayant une surface terminale plate et une partie collerette (9) couvrant une partie d'un support de disque (2a, 2b) dans le voisinage dudit trou central (3), et des couches adhésives (13, 14) entre les parties du moyeu (10) et un support de disque (2a, 2b), et entre les surfaces terminales plates des portions d'insertion (8) des deux parties (10) du moyeu.

2. Disque pour enregistrement d'informations, selon la revendication 1, dans lequel les supports de disque (2a, 2b) sont stratifiés au moyen de pièces d'espacement annulaires (5, 6) à l'emplacement ou près des bords extérieur et intérieur des supports de disque (2a, 2b).

3. Disque pour enregistrement d'informations, selon la revendication 1 ou 2, dans lequel les supports de disque (2a, 2b) sont stratifiés au moyen d'une couche adhésive ou par soudage par ultrasons.

4. Disque pour enregistrement d'informations, selon la revendication 1, dans lequel les supports de disque (2a, 2b) sont stratifiés directement au moyen d'une couche adhésive (7) (figure 2).
